# EUROPÄISCHE PATENTSCHRIFT

(11) **EP 4 232 311 B1**
(45) Veröffentlichungstag und Bekanntmachung des Hinweises auf die Patenterteilung: **11.12.2024**
(21) Anmeldenummer: 21787359.5
(22) Anmeldetag: 01.10.2021
(51) Int. Cl.: B60K 15/01, B60K 15/03

(54) **TANKVORRICHTUNG ZUR TEMPERATURDRUCKENTLASTUNG EINES BRENNSTOFFZELLENTANKS**
TANK SYSTEM FOR TEMPERATURE PRESSURE RELIEF OF A FUEL CELL TANK
SYSTÈME DE RÉSERVOIR POUR LA DÉCHARGE DE LA PRESSION THERMIQUE D'UN RÉSERVOIR DE PILE À COMBUSTIBLE

(30) Priorität: 21.10.2020 DE 102020213268
(43) Veröffentlichungstag der Anmeldung: 30.08.2023
(73) Patentinhaber: Robert Bosch GmbH, 70442 Stuttgart (DE)
(72) Erfinder: OHLHAFER, Olaf, 74391 Erligheim (DE); FREUDIGMANN, Hans-Arndt, 72072 Tuebingen (DE); STUKE, Bernd, 71229 Leonberg (DE)
(86) Internationale Anmeldenummer: PCT/EP2021/077140
(87) Internationale Veröffentlichungsnummer: WO 2022/084005

(56) Entgegenhaltungen:
- WO-A1-2019/233677
- DE-A1- 102012 011 612
- DE-A1- 102018 116 090
- DE-A1- 102018 209 057
- DE-A1- 102018 218 425
- US-A1- 2008 047 609
- US-A1- 2008 209 918
- US-A1- 2018 283 610
- US-A1- 2019 047 404
- US-A1- 2019 047 410
- US-A1- 2020 191 335
- US-B1- 6 418 962
- US-B2- 10 421 355

## Beschreibung

Die Erfindung betrifft eine Tankvorrichtung zur Temperaturdruckentlastung eines Brennstoffzellentanks, insbesondere zur Speicherung von Wasserstoff, beispielsweise zur Anwendung in Fahrzeugen mit Brennstoffzellenantrieb.

### Stand der Technik

Die DE 10 2017 212 485 A1 beschreibt eine Einrichtung zur Speicherung von verdichteten Fluiden, die als Kraftstoff für ein Fahrzeug dienen, wobei die Einrichtung mindestens zwei rohrförmige Tankmodule und mindestens einen Hochdruckkraftstoffzuteiler mit mindestens einer integrierten Regel- und Sicherheitstechnik umfasst. Außerdem bestehen die mindestens zwei rohrförmigen Tankmodule aus Metall und sind mit dem mindestens einen Hochdruckkraftstoffzuteiler mit der mindestens einen integrierten Regel- und Sicherheitstechnik modular zu einem Modul in flexibler Geometrie verbunden.

Die Sicherheitsvorrichtungen für solch eine Einrichtung wie in DE 10 2017 212 485 A1 gezeigt, sind normiert. Dabei muss jedes Tankmodul ein automatisch absperrbares Überströmventil und ein Sicherungsventil aufweisen. So kann das Überströmventil beispielsweise bei einem Unfall mit der Einrichtung zur Speicherung von verdichteten Fluiden oder bei einem Bruch einer Leitung innerhalb der Einrichtung verschließen, so dass kein Gas aus der Speichereinheit austreten kann. Weiterhin soll das Sicherungsventil beispielsweise bei einem Brand oder einer Temperaturerhöhung über einen vorbestimmten Schwellwert hinaus sicherstellen, dass beispielsweise der Wasserstoff aus dem Tankmodul hinausgeleitet werden kann, um einer Explosion des Tankmoduls oder sogar der gesamten Einrichtung zur Speicherung von verdichteten Fluiden vorzubeugen.

Für diese Sicherheitsvorkehrungen ist eine Vielzahl von Ventilen notwendig, wodurch die Komplexität des gesamten Gasspeichersystems sowie dessen Kosten erhöht werden. Weiterhin muss je nach Position des Sicherungsventils sichergestellt sein, so dass dieses auch auslöst, wenn sich der Brandherd nicht in der Nähe des Sicherungsventils befindet, um einer möglichen Explosion des Gasspeichersystems vorzubeugen.

Aus der DE 10 2018 116090 A1 ist eine Hochdruckbehältereinheit bekannt, wobei die Hochdruckbehältereinheit beinhaltet: mehrere zylindrische Behälter, die im Inneren eines Gehäuses aufgereiht sind, wobei Endabschnitte der Behälter auf einer Seite in deren axialen Richtung mit Öffnungen ausgestattet sind; ein Kopplungselement, das mit den Öffnungen der Behälter zum Koppeln der mehreren Behälter verbunden ist und einen Strömungsdurchgang beinhaltet, der die Innenräume der Behälter kommunizierend verbindet; eine Ausführleitung, die von dem Kopplungselement durch ein in dem Gehäuse gebildetes Durchgangsloch zum Äußeren des Gehäuses geführt ist; Sicherungselemente, die das Kopplungselement an dem Gehäuse sichern; und einen Haltemechanismus, der Abschnitte der Behälter auf der zu den Endabschnitten auf der einen Seite in der axialen Richtung anderen Axialrichtungsseite derart hält, dass jene Abschnitte der Behälter auf der anderen Axialrichtungsseite relativ zu dem Gehäuse in der axialen Richtung beweglich sind.

Aus der DE 10 2018 116090 A1 ist eine Hochdrucktank-Montagestruktur bekannt, die ein Gehäuse beinhaltet, das unter einem Boden einer Fahrzeugkabine angeordnet ist und eine Bodenwand, eine Umfangswand und eine obere Wand hat; eine Mehrzahl von Hochdrucktanks, die derart aufgenommen sind, dass sie in dem Gehäuse aneinandergereiht sind; und ein Abführloch, das an einem oberen Abschnitt des Gehäuses gebildet ist und Wasserstoff, der aus den Hochdrucktanks eingedrungen ist, zu einem Äußeren des Gehäuses abführt.

In der DE 10 2018 116090 A1 ist eine Tankvorrichtung zur Temperaturdruckentlastung eines Brennstoffzellentanks gezeigt, wobei die Tankvorrichtung mindestens zwei Tankbehälter und eine mit den Tankbehältern verbindbare Zufuhrleitung umfasst. Jeder Tankbehälter umfasst mindestens ein druckgesteuertes Überströmventil, wobei das Überströmventil zwischen dem jeweiligen Tankbehälter und der Zufuhrleitung angeordnet ist. Außerdem ist in der Zufuhrleitung ein zentrales Absperrventil angeordnet.

Aus der US 2020/191335 A1 ist eine Hochdruckbehältereinheit bekannt, umfassend: einen Behälterkörper, der dazu konfiguriert ist, Hochdruckgas zu lagern; ein Gehäuse, das den Behälterkörper im Inneren des Gehäuses lagert; ein Rohr, das mit dem Behälterkörper verbunden ist und sich zu einer Außenseite des Gehäuses erstreckt; und ein Verschlusselement, das dazu konfiguriert ist, das Rohr zu schließen und zu ermöglichen, dass das in dem Behälterkörper gelagerte Hochdruckgas aus dem Rohr abgelassen wird, wenn eine gegebene Bedingung erfüllt ist.

In der US 6 418 962 B1 ist ein Kraftstoffspeichersystem für Druckgasfahrzeuge gezeigt, das aus einer Vielzahl von Druckgas- Druckzellen besteht, die von stoßdämpfenden Stoßfängern getragen werden.

### Vorteile der Erfindung

Die erfindungsgemäße Tankvorrichtung mit den kennzeichnenden Merkmalen des Anspruchs 1 weist demgegenüber den Vorteil auf, dass in konstruktiv einfacher Weise eine lokale Wärmequelle an der Tankvorrichtung schnell und zuverlässig detektiert wird, um ein zuverlässiges Öffnen der Sicherungsventile zu gewährleisten.

Dazu umfasst die Tankvorrichtung zur Temperaturdruckentlastung eines Brennstoffzellentanks mindestens zwei Tankbehälter und eine mit den Tankbehältern verbindbare Zuführleitung. Jeder der mindestens zwei Tankbehälter weist an einem Ende mindestens ein Absperrventil auf, welches Absperrventil zwischen dem jeweiligen Tankbehälter und der Zufuhrleitung angeordnet ist. An einem anderen Ende des Tankbehälters ist weiterhin mindestens ein Sicherungsventil angeordnet ist. Darüber hinaus sind zumindest die mindestens zwei Tankbehälter und das jeweilige Sicherungsventil von einem rahmenförmigen Gehäuseelement zumindest nahezu vollständig umschlossen und/oder ist zu einer Umgebung, insbesondere druckdicht, gekapselt. Dabei herrscht in dem Gehäuseelement, insbesondere einem Innenraum, ein Überdruck, insbesondere zur Umgebung und/oder zu einem Umgebungsdruck. Das Gehäuseelement weist ein temperatursensitives Material, insbesondere Kunststoff, auf, wobei das temperatursensitive Material eine Schmelztemperatur unterhalb der Schmelztemperatur des Materials des Tankbehälters aufweist und wobei das Sicherungsventils bei einem Abfallen des im Innenraum vorherrschenden Drucks, insbesondere des Überdrucks, öffnet.

Dadurch ist sichergestellt, dass das jeweilige Sicherungsventil im Notfall wie beispielsweise einem Unfall mit ausgebrochenem Feuer auch sicher öffnet, um den gespeicherten Wasserstoff aus den Tankbehältern abzulassen und so einem Bersten der Tankbehälter entgegenzuwirken. Dabei ist es unabhängig davon, an welcher Stelle der Wärmeeintrag auf die Tankvorrichtung einwirkt, da bei Wärmeeintrag auf das Gehäuseelement ein Druckabfall im Innenraum, insbesondere des Überdrucks, des Gehäuseelements erzeugt wird, wodurch die Sicherungsventile ausgelöst werden können. Dabei deckt das rahmenförmige Gehäuseelement einen großen Bereich des Fahrzeugs ab, der im Falle eines Feuers zu einem Auslösen der Sicherungsventile führt. Zudem kann auf diese Weise der Vorteil erzielt werden, dass sichergestellt werden kann, dass das Material des Gehäuseelements schmilzt und somit der Druck innerhalb des Gehäuseelements abfällt, wodurch das Sicherungsventil öffnet und den Wasserstoff aus dem mindestens einen Tank ablässt, bevor das Material des mindestens einen Tanks versagt und der Tank bersten kann. Auf diese Weise kann eine Explosion und/oder ein Bersten des Tanks verhindert werden, insbesondere im Falle eines Unfalls und/oder Brandes des Gesamtfahrzeugs.

In erster vorteilhafter Weiterbildung ist es vorgesehen, dass das Sicherungsventil ein schmelzbares Medium, wie beispielsweise Wachs umfasst, so dass es sich insbesondere um ein Schmelzsicherheitsventil handelt. Auf diese Weise kann eine kostengünstige und kompakte Bauweise des Sicherungsventils herbeigeführt werden, welches im Falle eines Notfalls zuverlässig einmalig öffnet und somit der Wasserstoff aus dem Bereich des jeweiligen Tanks abgeführt werden kann.

In weiterer Ausgestaltung der Erfindung ist es vorteilhaft vorgesehen, dass das schmelzbare Medium des Sicherungsventils bei einer Temperaturerhöhung der Umgebung schmilzt und das Sicherungsventil somit öffnet. Auf diese Weise kann gewährleistet werden, dass im Falle eines Notfalls, bei dem es im Bereich des Fahrzeugs und/oder des Tanks zu einer Temperaturerhöhung, beispielsweise aufgrund eines Feuers kommt, das schmelzbare Medium erwärmt wird, wodurch sich der Aggregatzustand von zumindest nahezu fest zu zumindest nahezu flüssig ändert und sich das schmelzbare Medium aus dem Bereich des Sicherungsventil herausbewegt, insbesondere einem Halsbereich, und somit der im Tankbehälter gespeicherte Wasserstoff aus diesen abgelassen werden kann und dann über eine Abführleitung und/oder ein Ablassventil in die Umgebung abgeleitet werden kann. Somit kann Dadurch kann in einfacher und sicherer Weise der Wasserstoff aus den Tankbehältern in die Abführleitung geleitet und ein Bersten der Tankbehälter verhindert werden, insbesondere um eine Explosionsgefahr am Tanks und somit im Gesamtfahrzeugs zu verhindern.ln vorteilhafter Weiterbildung ist es vorgesehen, dass das jeweilige Sicherungsventil einen Drucksensor aufweist, der bei einer Druckänderung im Innenraum, ein Heizelement aktiviert, welches das schmelzbare Medium des Sicherungsventils erhitzt. Auf diese Weise kann sichergestellt werden, dass bei einem Druckabfall im Innenraum das schmelzbare Medium in einen zumindest nahezu flüssigen Aggregatzustand wechselt und somit das Sicherungsventil öffnet, indem das schmelzbare Medium abschmilzt, so dass der Wasserstoff aus dem Tank abgeführt werden kann.

In vorteilhafter Weiterbildung ist es vorgesehen, dass sich mindestens ein Ventil, bei dem es sich insbesondere um ein Druckbegrenzungsventil handelt, an mindestens einem der mindestens zwei Tankbehälter befindet, wobei das Ventil zu einem kontinuierlichen Ablassen des Wasserstoffs aus dem jeweiligen Tankbehälter in den Innenraum führt. Auf diese Weise lässt sich der Vorteil erzielen, dass eine möglicherweise am Gehäuseelement auftretende Leckage, bei der insbesondere nur eine geringe Menge wie beispielsweise weniger als 1% Gewichtsanteil des sich im Innenraum des Gehäuseelements befindlichen Gases pro Stunde austritt derart ausgeglichen werden kann, indem diese durch das im jeweiligen Tankbehälter befindlichen Gases ausgeglichen wird und somit der Druck im Innenraum des Gehäuseelements nicht abfällt und/oder zumindest nahezu beibehalten werden kann. Somit wird ein fehlerhaftes und nicht vorgesehenes Öffnen des Sicherungsventils verhindert, insbesondere wenn kein Notfall vorliegt, wie beispielsweise einem Unfall mit ausgebrochenem Feuer, besteht, so dass ein Ablassen von Wasserstoff aus dem Tank ohne vorliegenden Notfall verhindert wird.

In vorteilhafter Weiterbildung ist es vorgesehen, dass jeder jeweilige Tankbehälter mittels eines jeweiligen Sicherungsventils mit der Abführleitung verbindbar ist. Somit kann sichergestellt werden, dass jeder Tankbehälter über ein eigenes Sicherheitsventil verfügt, wodurch im Falle einer Fehlfunktion des Sicherheitsventils zumindest noch der Wasserstoff aus den anderen Tankbehältern abgelassen werden kann.

Die beschriebene Tankvorrichtung eignet sich vorzugsweise in einem Brennstoffzellensystem zur Speicherung von Wasserstoff für den Betrieb einer Brennstoffzelle.

In vorteilhaften Verwendungen kann die Tankvorrichtung in Fahrzeugen mit einem Brennstoffzellenantrieb verwendet werden.

### Zeichnungen

In der Zeichnung sind Ausführungsbeispiele einer erfindungsgemäßen Tankvorrichtung zur Temperaturdruckentlastung eines Brennstoffzellentanks dargestellt. Es zeigt in
Fig. 1 eine schematische Draufsicht einer erfindungsgemäßen Tankvorrichtung,
Fig. 2eine Draufsicht der erfindungsgemäßen Tankvorrichtung mit mindestens zwei Tankbehältern und einem umgebenden rahmenförmigen Gehäuseelement,
Fig. 3eine Seitenansicht der erfindungsgemäßen Tankvorrichtung mit mindestens zwei Tankbehältern und dem umgebenden rahmenförmigen Gehäuseelement,
Fig. 4eine Schnittansicht eines Sicherungsventils.

Alle Figuren sind lediglich schematische Darstellungen einer erfindungsgemäßen Tankvorrichtung, des erfindungsgemäßen Verfahrens bzw. seiner Bestandteile gemäß Ausführungsbeispielen der Erfindung. Insbesondere Abstände und Grö-ßenrelationen sind in den Figuren nicht maßstabsgetreu wiedergegeben.

### Beschreibung der Ausführungsbeispiele

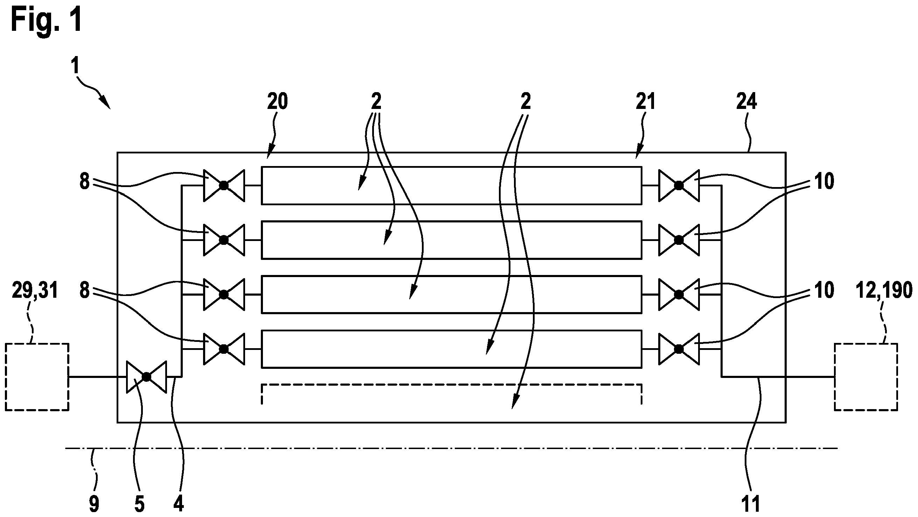

**Fig.** 1 zeigt ein Ausführungsbeispiel einer erfindungsgemäßen Tankvorrichtung 1 in einer Draufsicht. Die Tankvorrichtung 1 weist mehrere Tankbehälter 2 auf, welche im Wesentlichen zylinderförmig ausgebildet und aus Stahl gefertigt sind.

Der Darstellung gemäß **Fig.** 1 ist eine schematische Draufsicht der erfindungsgemäßen Tankvorrichtung 1 für ein Brennstoffzellensystem 31. Die Tankvorrichtung 1 weist dabei mindestens zwei Tankbehälter 2 zur Speicherung von Wasserstoff auf, sowie ein rahmenförmiges Gehäuseelement 24 und eine mit den Tankbehältern 2 verbindbare Zuführleitung 4. Dabei umgibt das rahmenförmige Gehäuseelement 24 die mindestens zwei Tankbehälter 2 und die Zuführleitung 4 zumindest teilweise, die mindestens zwei Tankbehälter 2 parallel zu einer Längsachse 9 verlaufen wobei. Dabei weist jeder der mindestens zwei Tankbehälter 2, welche im Wesentlichen zylinderförmig ausgebildet und aus Stahl gefertigt sind, mindestens ein Ventil 8, 10 auf. Bei diesem mindestens einen Ventil 8, 10 handelt es sich um ein Absperrventil 8 und/oder um ein Sicherheitsventil 10.

In einer beispielhaften Ausführungsform der Tankvorrichtung 1 weisen die mindestens zwei Tankbehälter 2 jeweils an einem ersten Ende 20 das Absperrventil 8 und an einem zweiten Ende 21 das Sicherheitsventil 10 aufweisen, wobei sich die jeweiligen Enden 20, 21 in Richtung der Längsachse 9 am jeweiligen Tankbehälter 2 befinden. Die beiden Tankbehälter 2 sind dabei zumindest annähernd röhrenförmig ausgeführt.

Weiterhin ist in **Fig.** 1 dargestellt, dass das Absperrventil 8 zwischen dem jeweiligen Tankbehälter 2 und der Zuführleitung 4 angeordnet ist, wobei die Zuführleitung 4 die jeweiligen Tankbehälter 2 mit dem Brennstoffzellensystem 31, insbesondere einer Brennstoffzelle 29 befindet. In einer beispielhaften Ausführungsform des Brennstoffzellensystems 31 kann der Wasserstoff aus der Tankvorrichtung 1, der insbesondere unter einem hohen Druck von zumindest nahezu 700 bar steht, über die Zuführleitung 4 zu einer Düse und/oder einem Ansaugbereich einer Strahlpumpe des Brennstoffzellensystem 31 gelangen. Zudem kann sich ein Zuführventil 5 im Bereich der Zuführleitung 4 befinden, insbesondere zwischen dem Absperrventil 8 und dem Brennstoffzellensystem 31, insbesondere einem Anodenbereich des Brennstoffzellensystems 31 und/oder zumindest mittelbar mit der Brennstoffzelle 29. Dabei kann sich das Zuführventil 5 innerhalb oder außerhalb des rahmenförmigen Gehäuseelements 24 befinden.

Im Bereich des zweiten Endes 21 des jeweiligen Tankbehälters 2, auf der der Tankbehälter 2 das Sicherheitsventil 10 aufweist, ist der Tankbehälter 2 über das das Sicherheitsventil 10 mit einer Verbindungsleitung 11 verbunden. Die Verbindungsleitung 11 dient dazu Im Falle eines Unfalls und/oder eines Feuers, Wasserstoff aus dem jeweiligen Tankbehälter 2 aus der Tankvorrichtung 1 herauszuleiten und so einem Bersten des jeweiligen Tankbehälters 2 entgegenzuwirken. Am dem Sicherheitsventil 10 und/oder dem Tankbehälter 2 abgewandten Ende der Verbindungsleitung 11, insbesondere ihrem stromabwärtigen Ende kann sich ein Ablassventil 12 befinden, über den, im Falle eines Unfalls oder Brandes, der Wasserstoff in eine Umgebung 190 des Fahrzeugs abgelassen werden kann, insbesondere in einen Bereich, in dem sich entzündender Wasserstoff das Gesamtfahrzeug und die Insassen nicht mehr schädigen oder verletzen kann. In einer weiteren beispielhaften Ausführung der Tankvorrichtung 1 kann jeder jeweilige Tankbehälter 2 mittels eines jeweiligen Sicherungsventils 10 mit einer Abführleitung 11 verbindbar sein.

Bei dem Sicherungsventil 10 kann es sich in einer beispielhaften Ausführungsform um ein sogenanntes Schmelzsicherungsventil 10 und/oder TPRD- (Thermal Pressure Relief Device) Ventil 10, welches ein schmelzendes Medium wie beispielsweise Wachs aufweist, handeln, um im Ernstfall bei Wärmeeinträgen auf die Tankbehälter 2 ein Öffnen des Sicherungsventils 10 durch das Schmelzen des Wachses auszulösen. Somit ist der jeweilige Tankbehälter 2 in dieser beispielhaften Ausführungsform mit seinem ersten Ende 20 über das Absperrventil 8 mit der Zuführleitung 4 verbunden und/oder mit seinem zweiten Ende 21 über das Sicherheitsventil 10, das insbesondere als ein Schmelzsicherheitsventil 10 ausgeführt ist, mit der Verbindungsleitung 11 verbunden.

Des Weiteren kann sich im Bereich der Verbindungsleitung 11, insbesondere zwischen dem Sicherheitsventil 10 und dem Ablassventil 12 ein weiteres Ventil befinden. Dieses weitere Ventil und/oder das Ablassventil 12 können sich dabei 5 innerhalb oder außerhalb des rahmenförmigen Gehäuseelements 24 befinden.

Die jeweiligen Enden 20, 21 des jeweiligen Tankbehälters 2 weisen eine konische Verjüngung und somit eine typische Flaschenhalsstruktur auf.

Die in **Fig.** 1 gezeigte Tankvorrichtung 1 dient dabei zur Temperaturdruckentlastung eines Brennstoffzellentanks. Erfindungsgemäß sind dabei zumindest die mindestens zwei Tankbehälter 2 und das jeweilige Sicherungsventil 10 von dem Gehäuseelement 24 zumindest nahezu vollständig umschlossen und/oder zur Umgebung 190, insbesondere druckdicht, gekapselt sind. In dem Gehäuseelement 24, insbesondere dem Innenraum 180, herrscht ein Überdruck 181, insbesondere zur Umgebung 190 und/oder zu einem Umgebungsdruck 191. Dabei kann die Druckdifferenz des Überdrucks 181 im Innenraum 180 beispielsweise zumindest 0,1 bar zum Umgebungsdruck 191 der Umgebung 190 betragen, wobei es sich bei der Umgebung 190 auch um die Umgebung 190 außerhalb des Gesamtfahrzeugs handeln kann. Das Gehäuseelement 24 umfasst dabei zumindest ein temperatursensitives Material 25, insbesondere Kunststoff. Ein schmelzbare Medium 71 des Sicherungsventils 10 kann dabei bei einem Abfallen des im Innenraum 180 vorherrschenden Drucks, insbesondere des Überdrucks 181, schmelzen und das Sicherungsventil 10 somit öffnen. Der Wirkmechanismus-Kette ist dabei, dass im Falle eines Brandes oder einer Temperaturerhöhung aufgrund eines Unfalls im Bereich der Tankvorrichtung 1 und/oder des Gesamtfahrzeugs an einer beliebigen Stelle des Gehäuseelements 24 ein derartiger Temperatureintrag stattfindet, dass das temperatursensitive Material 25 abschmilzt und sich somit eine Öffnung im Gehäuseelement 24 befindet, durch die das gasförmige Medium aus dem Innenraum 180 entweicht, insbesondere in die Umgebung 190, und sich somit der Überdruck 181 verringert und zumindest nahezu an den Umgebungsdruck 191 angleicht. Durch den Druckabfall im Innenraum 180 öffnet nun zumindest indirekt das Sicherungsventil 10 und führt den im Tankbehälter 2 befindlichen Wasserstoff über die Abführleitung 11 und das Ablassventil 12 aus der Tankvorrichtung 1 heraus, so dass der Wasserstoff für die Tankvorrichtung 1 und das Gesamtfahrzeug ungefährlich ist, beispielsweise aufgrund eines Brandes der durch einen Unfall ausgelöst wird. Vorteilhaft ist hierbei, dass aufgrund der erfindungsgemäßen Ausgestaltung der Tankvorrichtung 1 das Sicherheitsventil 10 nicht erst auslöst, wenn dasselbe durch den Temperatureintrag des Brandes direkt am Sicherheitsventil 10 öffnet, sondern das der Bereich vergrößert wird, in dem ein Temperatureintrag aufgrund eines Brands zu einem Öffnen des Sicherheitsventils 10 führt, beispielsweise im Bereich des gesamten rahmenförmigen Gehäuseelements 24. Somit kann der Wasserstoff aus dem jeweiligen Zeitpunkt früher abgeführt werden, bevor dieser das Sicherheitsventil 10 und/oder den jeweiligen Tankbehälter 2 erreicht. Dies reduziert die Gefahr eines schwerwiegenden Unfalls durch das Feuer entzündetem Wasserstoffs und oder einem Bersten der Tankbehälter 2, da der Wasserstoff schon sehr viel früher aus der Tankvorrichtung 1 und/oder dem Gesamtfahrzeug abgelassen werden kann.

Die Funktionsweise der Tankvorrichtung 1 ist die folgende: Bei einer ordentlichen Funktionsweise des Brennstoffzellensystems 31wird die Brennstoffzelle 29 mit Wasserstoff aus den Tankbehältern 2 versorgt. Dabei werden die Absperrventile 8 so ausgelegt, dass eine sichere Zufuhr zu der Brennstoffzelle 29 gewährleistet ist.

Erfolgt, beispielsweise verursacht durch Feuer, ein Wärmeeintrag auf die Tankvorrichtung 1 bzw. die Tankbehälter 2, so sollen die Sicherungsventile 10 möglichst schnell nach Auftreten des Wärmeeintrags auslösen, so dass der Wasserstoff aus den Tankbehältern 2 geleitet werden kann, um beispielsweise einer Explosion der Tankbehälter 2 vorzubeugen. Dabei wird in der Regel auch der Stromzufuhr zu den Absperrventilen 8 unterbrochen, so dass kein Wasserstoff mehr aus den Tankbehältern 2 entweichen kann.

Um sicherzustellen, dass die Sicherungsventile 10 auch auslösen, wenn beispielsweise ein Wärmeeintrag nicht in der Nähe der Sicherungsventile 10 auftritt, beispielsweise ein Wärmeeintrag an dem ersten Ende 20 der Tankbehälter 2 erfolgt, so wird die erfindungsgemäße Ausgestaltung der Tankvorrichtung 1 mit dem Überdruck 181 innerhalb des Gehäuseelements 24 ein zuverlässiges Öffnen der Sicherungsventile 10 sichergestellt.

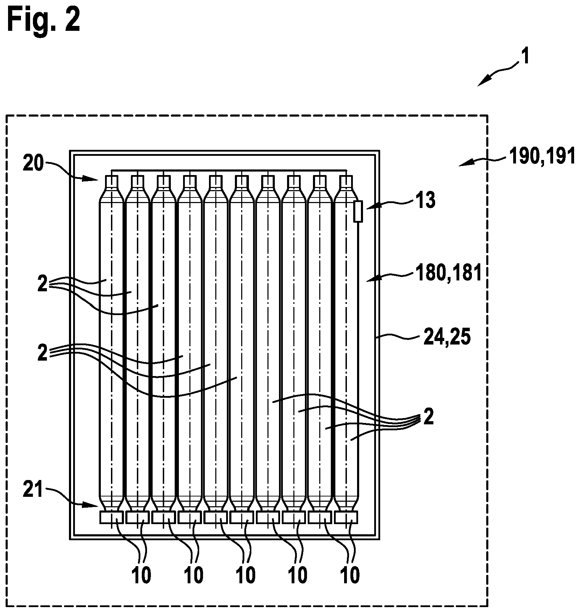

**Fig.** 2 zeigt eine Draufsicht der erfindungsgemäßen Tankvorrichtung 1 mit mindestens zwei Tankbehältern 2 und dem umgebenden rahmenförmigen Gehäuseelements 24. Dabei können sich in einer beispielhaften Ausführungsform der Tankvorrichtung 1 die jeweiligen Sicherungsventile 10 an einem geodätisch tiefsten Punkt der Tankvorrichtung 1 befinden. Das Sicherungsventil 10 weist dabei das schmelzbares Medium 71, wie beispielsweise Wachs 71 umfasst, so dass es sich insbesondere um ein Schmelzsicherheitsventil 10 handelt. Des Weiteren schmilzt das schmelzbare Medium 71 des Sicherungsventils 7 bei einer Temperaturerhöhung der Umgebung 190, wodurch das Sicherungsventil 10 öffnet. Das rahmenförmige Gehäuseelement 24 weist dabei das temperatursensitive Material 25 auf, wobei die Schmelztemperatur des temperatursensitiven Materials 25 unterhalb der Schmelztemperatur des Materials der jeweiligen Tankbehälters 2 liegt.

Des Weiteren ist in **Fig.** 2 gezeigt, dass sich mindestens ein Ventil 13, bei dem es sich insbesondere um ein Druckbegrenzungsventil 13 handelt, an mindestens einem der mindestens zwei Tankbehälter 2 befindet, wobei das Ventil 13 zu einem kontinuierlichen Ablassen des Wasserstoffs aus dem jeweiligen Tankbehälter 2 in den Innenraum 180 führt. Dies kann bei einer möglichen Leckage am Gehäuseelement 24, bei der eine geringe Menge des im Innenraum 180 befindlichen Gases in die Umgebung 190 entweicht, ausgeglichen werden kann, durch das im Tankbehälter 2 befindliche Gas, dass über das Ventil 13 in den Innenraum 180 geleitet wird. Dabei wird verhindert, dass der Überdruck 181 abfällt, wenn gar kein Unfall und/oder Brand vorliegt, und das Sicherungsventil 10 somit auslösen würde. Dies kann insbesondere der Fall sein, falls eine Leckage aufgrund einer kleinen Punktion des Gehäuseelements 24 vorliegt. Dabei wird das Druckniveau innerhalb des Innenraums 180 gehalten.

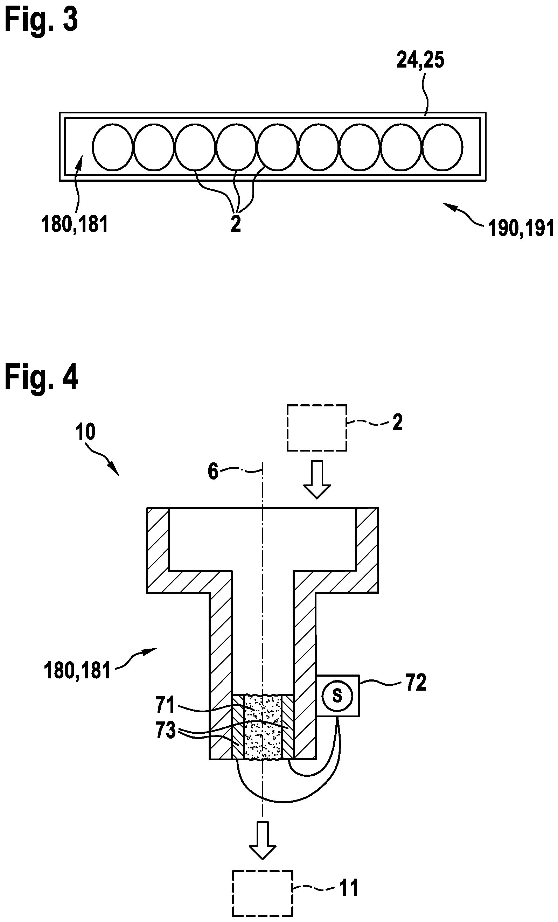

**Fig.** 3 zeigt eine Seitenansicht der erfindungsgemäßen Tankvorrichtung 1 mit mindestens zwei Tankbehältern 2 und dem umgebenden rahmenförmigen Gehäuseelement 24. Dabei ist gezeigt, dass sich die Tankbehälter 2 in einer Ebene nebeneinander angeordnet sind, wobei des Gehäuseelement 24 die Tankbehälter 2 umgibt und im Innenraum 180 des Gehäuseelements 24 ein Überdruck 181 ausgebildet ist, insbesondere zum Umgebungsdruck 191.

In **Fig.** 4 ist eine beispielhaften Ausführungsform der Tankvorrichtung 1 und/oder des Sicherungsventils 10 gezeigt, dass das jeweilige Sicherungsventil 10 einen Drucksensor 72 aufweist, der bei einer Druckänderung im Innenraum 180, ein Heizelement 73 aktiviert, welches das schmelzbare Medium 71 des Sicherungsventils 10 erhitzt. Der Sensor 72 ist dabei mit dem Heizelement 73 beispielsweise mittels einer Verkabelung verbunden, sobald der Druck, insbesondere Überdruck 181, im Innenraum 180 einen Grenzwert unterschreitet, steuert der Sensor 72 das Heizelement 73 an und/oder versorgt das Heizelement 73 mit Energie. Daraufhin schmilzt das schmelzbare Medium 71 aufgrund des Temperatureintrags, fließt ab, insbesondere in Richtung einer Abführleitung 11 und somit öffnet das Sicherungsventil 10, so dass der Wasserstoff aus dem Tankbehälter 2 entweichen kann. Dabei kann das Heizelement 73 hülsenförmig umlaufend um eine Mittelachse 6 ausgebildet sein, somit befindet sich das schmelzbare Medium 71 im Inneren des Heizelement 73.

Die Öffnung des jeweiligen Sicherungsventils 10 ist in allen Ausführungsbeispielen irreversibel, da im Brandfall die Tankbehälter 2 schnell und effizient entleert werden und für die Sicherstellung einer vollständigen Entleerung das Sicherungsventil 10 im geöffneten Zustand bleiben soll.

## Patentansprüche

1. Tankvorrichtung (1) zur Temperaturdruckentlastung eines Brennstoffzellentanks, wobei die Tankvorrichtung (1) mindestens zwei Tankbehälter (2) und eine mit den Tankbehältern (2) verbindbare Zuführleitung (4) umfasst, wobei jeder der mindestens zwei Tankbehälter (2) an einem Ende (20) mindestens ein Absperrventil (8) aufweist, welches Absperrventil (8) zwischen dem jeweiligen Tankbehälter (2) und der Zufuhrleitung (4) angeordnet ist, wobei an einem anderen Ende (21) des Tankbehälters (2) mindestens ein Sicherungsventil (10) angeordnet ist, **dadurch gekennzeichnet, dass** zumindest die mindestens zwei Tankbehälter (2) und das jeweilige Sicherungsventil (10) von einem Gehäuseelement (24) zumindest nahezu vollständig umschlossen und/oder zu einer Umgebung (190), insbesondere druckdicht, gekapselt sind, wobei in dem Gehäuseelement (24), insbesondere einem Innenraum (180), ein Überdruck (181), insbesondere zur Umgebung (190) und/oder zu einem Umgebungsdruck (191), herrscht, wobei das Gehäuseelement (24) ein temperatursensitives Material (25), insbesondere Kunststoff, aufweist, wobei das temperatursensitive Material (25) eine Schmelztemperatur unterhalb der Schmelztemperatur des Materials des Tankbehälters (2) aufweist und wobei das Sicherungsventils (10) bei einem Abfallen des im Innenraum (180) vorherrschenden Drucks, insbesondere des Überdrucks (181), öffnet.

2. Tankvorrichtung (1) nach Anspruch 1, **dadurch gekennzeichnet, dass** das Sicherungsventil (10) ein schmelzbares Medium (71), wie beispielsweise Wachs (71) umfasst, so dass es sich insbesondere um ein Schmelzsicherheitsventil (10) handelt.

3. Tankvorrichtung (1) nach Anspruch 1 oder 2, **dadurch gekennzeichnet, dass** das schmelzbare Medium (71) des Sicherungsventils (10) bei einer Temperaturerhöhung der Umgebung (190) schmilzt und das Sicherungsventil (10) somit öffnet.

4. Tankvorrichtung (1) nach Anspruch 1 oder 2, **dadurch gekennzeichnet, dass** das jeweilige Sicherungsventil (10) einen Drucksensor (72) aufweist, der bei einer Druckänderung im Innenraum (180), ein Heizelement (73) aktiviert, welches das schmelzbare Medium (71) des Sicherungsventils (10) erhitzt.

5. Tankvorrichtung (1) nach Anspruch 1, **dadurch gekennzeichnet, dass** sich mindestens ein Ventil (13), bei dem es sich insbesondere um ein Druckbegrenzungsventil (13) handelt, an mindestens einem der mindestens zwei Tankbehälter (2) befindet, wobei das Ventil (13) zu einem kontinuierlichen Ablassen des Wasserstoffs aus dem jeweiligen Tankbehälter (2) in den Innenraum (180) führt.

6. Tankvorrichtung (1) nach Anspruch 1, **dadurch gekennzeichnet, dass** jeder jeweilige Tankbehälter (2) mittels des jeweiligen Sicherungsventils (10) mit einer Abführleitung (11) verbindbar ist.

7. Brennstoffzellensystem (31) mit einer Tankvorrichtung (1) nach einem der vorhergehenden Ansprüche.

8. Brennstoffzellenbetriebenes Fahrzeug mit einer Tankvorrichtung (1) nach einem der Ansprüche 1 bis 6.

## Claims

1. Tank apparatus (1) for temperature pressure relief of a fuel cell tank, the tank apparatus (1) comprising at least two tank vessels (2) and a feed line (4) which can be connected to the tank vessels (2), each of the at least two tank vessels (2) having, at one end (20), at least one shut-off valve (8), which shut-off valve (8) is arranged between the respective tank vessel (2) and the feed line (4), at least one safety valve (10) being arranged at another end (21) of the tank vessel (2), **characterized in that** at least the at least two tank vessels (2) and the respective safety valve (10) are enclosed at least approximately completely by a housing element (24) and/or are encapsulated, in particular in a pressure-tight manner, with respect to a surrounding area (190), a positive pressure (181), in particular with respect to the surrounding area (190) and/or with respect to an ambient pressure (191), prevailing in the housing element (24), in particular an interior space (180), the housing element (24) comprising a temperature-sensitive material (25), in particular plastic, the temperature-sensitive material (25) having a melting temperature below the melting temperature of the material of the tank vessel (2), and the safety valve (10) opening in the case of the pressure which prevails in the interior space (180), in particular the positive pressure (181), dropping.

2. Tank apparatus (1) according to Claim 1, **characterized in that** the safety valve (10) comprises a fusible medium (71) such as, for example, wax (71), with the result that this is, in particular, a fusible safety valve (10).

3. Tank apparatus (1) according to Claim 1 or 2, **characterized in that** the fusible medium (71) of the safety valve (10) melts in the case of a temperature increase of the surrounding area (190), and therefore opens the safety valve (10).

4. Tank apparatus (1) according to Claim 1 or 2, **characterized in that** the respective safety valve (10) comprises a pressure sensor (72) which, in the case of a pressure change in the interior space (180), activates a heating element (73) which heats the fusible medium (71) of the safety valve (10).

5. Tank apparatus (1) according to Claim 1, **characterized in that** at least one valve (13), which is, in particular, a pressure relief valve (13), is situated on at least one of the at least two tank vessels (2), the valve (13) leading to a continuous discharge of the hydrogen from the respective tank vessel (2) into the interior space (180).

6. Tank apparatus (1) according to Claim 1, **characterized in that** each respective tank vessel (2) can be connected by means of the respective safety valve (10) to a discharge line (11).

7. Fuel cell system (31) with a tank apparatus (1) according to one of the preceding claims.

8. Fuel cell-operated vehicle with a tank apparatus (1) according to one of Claims 1 to 6.

## Revendications

1. Dispositif de réservoir (1) pour la décharge de la pression thermique d'un réservoir de pile à combustible, le dispositif de réservoir (1) comprenant au moins deux contenants de réservoir (2) et une conduite d'amenée (4) pouvant être reliée aux contenants de réservoir (2), chacun des au moins deux contenants de réservoir (2) présentant à une extrémité (20) au moins une soupape d'arrêt (8), laquelle soupape d'arrêt (8) est agencée entre le contenant de réservoir (2) respectif et la conduite d'amenée (4), au moins une soupape de sécurité (10) étant agencée à une autre extrémité (21) du contenant de réservoir (2), **caractérisé en ce qu'**au moins les au moins deux contenants de réservoir (2) et la soupape de sécurité (10) respective sont au moins presque entièrement entourés par un élément de boîtier (24) et/ou en-capsulés par rapport à un environnement (190), notamment de manière étanche à la pression, une surpression (181), notamment par rapport à l'environnement (190) et/ou à une pression ambiante (191), régnant dans l'élément de boîtier (24), notamment dans un espace intérieur (180), l'élément de boîtier (24) présentant un matériau (25) sensible à la température, notamment une matière plastique, le matériau sensible à la température (25) présentant une température de fusion inférieure à la température de fusion du matériau du contenant de réservoir (2), et la soupape de sécurité (10) s'ouvrant lors d'une chute de la pression régnant dans l'espace intérieur (180), notamment de la surpression (181).

2. Dispositif de réservoir (1) selon la revendication 1, **caractérisé en ce que** la soupape de sécurité (10) comprend un milieu fusible (71), tel que par exemple de la cire (71), de telle sorte qu'il s'agit notamment d'une soupape de sécurité fusible (10).

3. Dispositif de réservoir (1) selon la revendication 1 ou 2, **caractérisé en ce que** le milieu fusible (71) de la soupape de sécurité (10) fond lors d'une augmentation de la température de l'environnement (190) et ouvre ainsi la soupape de sécurité (10).

4. Dispositif de réservoir (1) selon la revendication 1 ou 2, **caractérisé en ce que** la soupape de sécurité (10) respective présente un capteur de pression (72) qui, en cas de changement de pression dans l'espace intérieur (180), active un élément chauffant (73) qui chauffe le milieu fusible (71) de la soupape de sécurité (10).

5. Dispositif de réservoir (1) selon la revendication 1, **caractérisé en ce qu'**au moins une soupape (13), qui est notamment une soupape de limitation de pression (13), se trouve sur au moins l'un des au moins deux contenants de réservoir (2), la soupape (13) conduisant à une évacuation continue de l'hydrogène du contenant de réservoir (2) respectif dans l'espace intérieur (180).

6. Dispositif de réservoir (1) selon la revendication 1, **caractérisé en ce que** chaque contenant de réservoir respectif (2) peut être relié à une conduite d'évacuation (11) au moyen de la soupape de sécurité respective (10).

7. Système de pile à combustible (31) avec un dispositif de réservoir (1) selon l'une quelconque des revendications précédentes.

8. Véhicule alimenté par pile à combustible avec un dispositif de réservoir (1) selon l'une quelconque des revendications 1 à 6.
